(19) Europäisches Patentamt
European Patent Office
Office européen des brevets

(11) **EP 2 269 141 B1**

(12) **FASCICULE DE BREVET EUROPEEN**

(45) Date de publication et mention
de la délivrance du brevet:
**10.07.2013 Bulletin 2013/28**

(51) Int Cl.:
*G06F 13/42* (2006.01)   *G06F 7/76* (2006.01)
*H03M 7/04* (2006.01)

(21) Numéro de dépôt: **09720985.2**

(86) Numéro de dépôt international:
**PCT/FR2009/050214**

(22) Date de dépôt: **11.02.2009**

(87) Numéro de publication internationale:
**WO 2009/112729 (17.09.2009 Gazette 2009/38)**

(54) **PROCÉDÉ ET DISPOSITIF DE CODAGE, SYSTÈME ÉLECTRONIQUE ET SUPPORT D'ENREGISTREMENT ASSOCIÉS**

CODIERUNGSVERFAHREN UND EINRICHTUNG, DIESBEZÜGLICHES ELEKTRONISCHES SYSTEM UND AUFZEICHNUNGSMEDIUM

CODING METHOD AND DEVICE, ASSOCIATED ELECTRONIC SYSTEM AND RECORDING MEDIUM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.03.2008 FR 0851672**

(43) Date de publication de la demande:
**05.01.2011 Bulletin 2011/01**

(73) Titulaires:
• **Centre National de la Recherche Scientifique (C.N.R.S)**
**75016 Paris (FR)**
• **Université de Bretagne Sud**
**56321 Lorient Cedex (FR)**
• **Université de Rennes 1**
**35065 Rennes Cedex (FR)**

(72) Inventeurs:
• **LAURENT, Johann**
**F-29360 Clohars Carnoët (FR)**
• **COURTAY, Antoine**
**F-56100 Lorient (FR)**
• **SENTIEYS, Olivier**
**F-22700 Louannec (FR)**
• **JULIEN, Nathalie**
**F-56520 Guidel (FR)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A- 0 444 774      EP-A- 1 380 961**
**US-A1- 2007 242 508      US-B1- 6 243 808**

**Description**

La présente invention concerne un procédé et un dispositif de codage de bits.

La consommation électrique des systèmes électroniques a considérablement augmenté. Celle-ci résulte d'une part de l'accroissement de la puissance de calcul nécessaire pour effectuer des tâches complexes et d'autre part du nombre toujours plus important de données à traiter. En effet, lorsqu'un système électronique traite un nombre important de données, l'activité sur les interconnexions augmente, ce qui a pour effet d'augmenter significativement la consommation électrique du système électronique. A cet effet, des études montrent que, dans les systèmes sur puces actuels, les interconnexions représentent jusqu'à 60% de la consommation totale de la puce.

De nombreux travaux de recherche portent sur l'optimisation de la consommation des interconnexions, notamment par l'introduction de codeurs - décodeurs dans les systèmes électroniques.

Par exemple, la technique dite du « partial bus invert », décrite dans le document intitulé Partial bus invert coding for power optimization of system level bus ; Y. Shin, S.IK Chae and K. Choi ; In processing of the 1998 international symposium on low power electronics and design (ISLPED) ; en pages 127-129 New York USA, 1998 ACM Press, consiste à comparer le nombre de bits changeant entre une donnée n-1 au cycle d'horloge t-1 et une donnée n au cycle d'horloge t. Si cette différence généralement appelée distance de Hamming est supérieure à la moitié de la largeur du bus, alors la donnée envoyée au cycle d'horloge t sera la donnée complémentée.

Néanmoins, l'implantation de ces techniques nécessite l'ajout de transistors, registres et fils électriques supplémentaires, qui entraîne une nouvelle augmentation de l'énergie électrique consommée de sorte que le surcoût en consommation électrique générée par ces composants électroniques est parfois équivalent ou même plus important que le gain en consommation électrique réalisé sur l'interconnexion.

EP 1 380 961 A décrit un codeur selon le préambule de la revendication 1.

L'invention a pour but un codeur - décodeur et un procédé de codage - décodage alternatif offrant un gain de consommation électrique sur l'interconnexion tout en introduisant un surcoût minimum de consommation électrique.

A cet effet, l'invention a pour objet un codeur selon la revendication 1.

Des modes particuliers du codeur sont spécifiés dans les revendications dépendantes 2 à 6 attenantes.

L'invention concerne également un décodeur selon la revendication 7.

Un mode particulier du décodeur est spécifié dans la revendication dépendante 8.

Par ailleurs, l'invention a également pour objet un système électronique selon la revendication 9.

L'invention a également pour objet un procédé de codage de bits selon la revendication 10.

En outre, l'invention a également pour objet un procédé de décodage selon la revendication 11.

Enfin, l'invention concerne un support d'enregistrement d'informations selon la revendication 12 et un support d'enregistrement d'informations selon la revendication 13.

L'invention sera mieux comprise à la lecture de la description qui va suivre, donnée uniquement à titre d'exemple et faite en se référant aux dessins annexés, sur lesquels :

- la figure 1 est un schéma représentant l'architecture d'un codeur selon l'invention ;
- la figure 2 est un schéma représentatif d'un décodeur selon l'invention ;
- la figure 3 est un schéma schématique d'un système électronique comportant un codeur et un décodeur selon l'invention ;
- la figure 4 est un schéma représentant le taux d'activité des bits sur un bus ;
- la figure 5 est un diagramme des étapes du procédé de codage et de décodage selon l'invention ;
- la figure 6 est un tableau représentant des exemples de transitions de bits sur deux fils électriques adjacents ;
- la figure 7 est un graphe représentant l'évolution du nombre de transistors en fonction du nombre de bits à traiter pour un codeur selon l'invention et un codeur existant ;
- la figure 8 est un graphe représentant le gain en consommation électrique en fonction du nombre de fils électriques d'un bus pour des données de type parole ; et
- la figure 9 est un graphe identique au graphe de la figure 8 pour des données de type image.

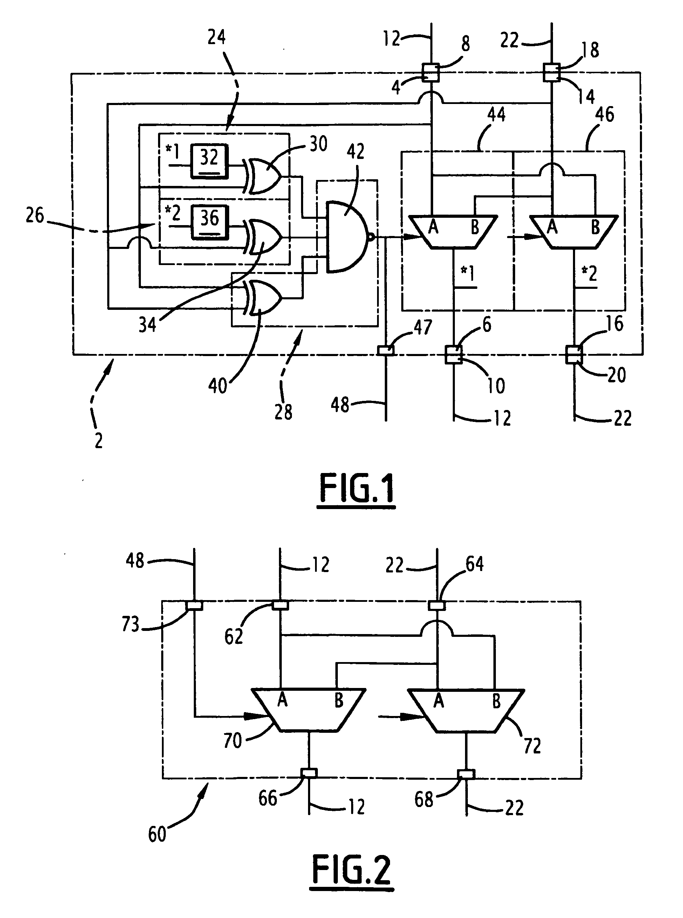

En référence à la figure 1, le codeur 2 selon l'invention comporte un premier connecteur d'entrée 4 et un premier connecteur de sortie 6 destinés à être connectés à un premier conducteur électrique 12, via un connecteur complémentaire 8, 10.

Le codeur 2 comporte en outre un deuxième connecteur d'entrée 14 et un deuxième connecteur de sortie 16 destinés à être connectés à un deuxième fil conducteur 22, via un connecteur complémentaire 18, 20.

Le premier 4 et le deuxième 14 connecteurs d'entrée sont appelés ci-après première et deuxième entrées. De même, le premier 6 et le deuxième 16 connecteurs de sortie sont appelés ci-après première et deuxième sorties.

Les premier 12 et deuxième 22 conducteurs électriques sont deux fils électriques adjacents l'un de l'autre par exemple d'un ensemble de fils électriques parallèles, appelés bus parallèles.

Le premier fil électrique 12 est propre à transmettre les bits de poids les plus forts parmi les deux fils électriques du bus représentés sur la figure 1.

Le codeur 2 comporte une première 24, une deuxième 26 et une troisième 28 unités de sélection propres à sélectionner deux transitions de bits spatialement inversées sur deux fils adjacents 12, 22, c'est-à-dire un passage d'une valeur de bits de 0 à 1 sur un fil et un passage d'une valeur de bits de 1 à 0 sur l'autre fil au même cycle d'horloge t.

La première unité de sélection 24 est formée d'une première porte logique XOR 30, reliée en entrée à la première entrée 4, et d'un registre 32 connecté en entrée à la première sortie 6 et en sortie à la première porte logique 30. La première porte logique est une porte XOR, c'est-à-dire une porte « ou exclusif ».

La deuxième unité de sélection 26 est similaire à la première unité de sélection 24. Elle comprend une deuxième porte logique 34 de type XOR reliée en entrée à la deuxième entrée 14, et un registre 36 connecté en entrée à la deuxième sortie 16 et en sortie à la deuxième porte XOR 34.

La première 24, la deuxième 26 et la troisième 28 unités de sélection forment un bloc de sélection.

La troisième unité de sélection 28 comprend une troisième porte logique 40 de type XOR dont une entrée est connectée à la première entrée 4 et dont l'autre entrée est connectée à la deuxième entrée 14, et une quatrième porte logique 42 connectée en entrée aux sorties des première 30, deuxième 34 et troisième 40 portes XOR.

La quatrième porte logique 42 est une porte NAND, c'est à dire une porte « non-et ».

Le codeur 2 comporte par ailleurs un premier 44 et un deuxième 46 connecteurs commutables aptes à transmettre certains bits de poids faible sélectionnés par les unités de sélection, sur le fil électrique de transmission de bit de poids fort 12, et certain bits de poids fort sélectionnés par les unités de sélection, sur le fil électrique de transmission du bit de poids faible 22, comme explicité ci-après.

Le premier 44 connecteur est formé par un multiplexeur 44 dont les voies A et B sont connectées à la première entrée 4 et respectivement à la deuxième entrée 14. La sortie du multiplexeur 44 est reliée à la première sortie 6.

Le deuxième connecteur 46 est formé par un multiplexeur 46 dont les voies A et B sont connectées à la deuxième entrée 14 et respectivement à la première entrée 4. La sortie du multiplexeur 46 est reliée à la deuxième sortie 16.

Les électrodes de commande des multiplexeurs 44 et 46 sont reliées à la sortie de la porte NAND 42.

Enfin, le codeur 2 comprend en outre un moyen de connexion 47 relié à la sortie de la porte NAND 42. Le moyen de connexion 47 est destiné à être connecté à un troisième fil électrique 48 qui transmet les bits de valeur égale à 0, générés par cette porte NAND 42 au décodeur 60 selon l'invention.

En référence à la figure 2, le décodeur 60 selon l'invention comprend un premier 62 et un deuxième 64 connecteurs d'entrée, ci-après appelés première et deuxième entrées ; et un premier 66 et un deuxième 68 connecteurs de sortie ci-après appelés première et deuxième sorties.

La première entrée 62 et la première sortie 66 sont aptes à être connectées au premier fil électrique 12 de transmission de bits de poids fort. La deuxième entrée 64 et la deuxième sortie 68 sont aptes à être connectées au deuxième fil électrique 22 de transmission de bits de poids faible.

Le décodeur 60 comprend un premier 70 et un deuxième 72 connecteurs commutables formant un bloc de commutation. Les connecteurs 70, 72 sont aptes à adresser au fil électrique 22 les bits de poids faible transmis par le fil électrique 12, et à adresser au fil électrique 12 les bits de poids fort transmis par le fil électrique 22.

Le premier connecteur commutable 70 est constitué par un multiplexeur 70 dont les voies A et B sont reliées à la première 62 et respectivement la deuxième 64 entrées. La sortie du multiplexeur 70 est reliée à la première sortie 66.

De façon similaire, le deuxième connecteur commutable 72 est constitué par un multiplexeur 72 dont les voies A et B sont reliées à la deuxième 64 et respectivement la première 62 entrées. La sortie du multiplexeur 72 est reliée à la deuxième sortie 68.

Les électrodes de commande des multiplexeurs 70 et 72 sont chacune reliées à un moyen de connexion 73 destiné à être connecté au troisième fil électrique 48 relié au codeur 2.

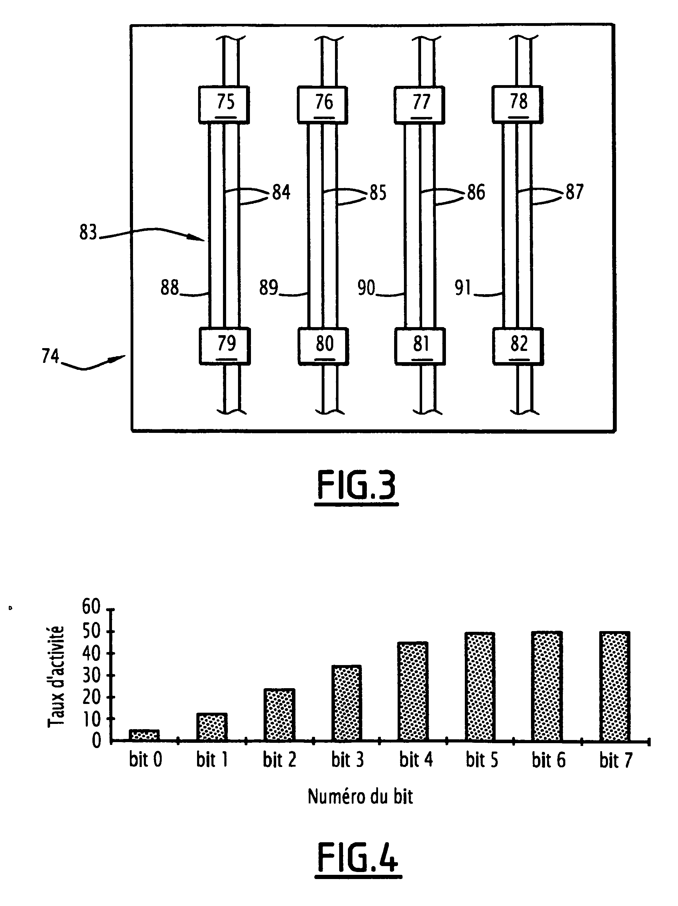

En référence à la figure 3, l'invention concerne également un système électronique 74 représenté schématiquement, comprenant un bus de données parallèle 83 muni de huit fils électriques, ainsi que quatre codeurs 75, 76, 77, 78 et quatre décodeurs 79, 80, 81, 82, tels que décrits ci-dessus. Les codeurs 75, 76, 77, 78 sont reliés chacun à un des décodeurs 79, 80, 81, 82, par une paire de fils électriques 84, 85, 86, 87. Un fil électrique supplémentaire 88, 89, 90, 91 de transmission du signal d'avertissement est relié à chaque codeur et au décodeur auquel le codeur est connecté.

Chaque codeur et chaque décodeur sont aptes à coder et à décoder les bits transitant sur les fils électriques auxquels ils sont reliés de sorte que l'ensemble des bits transitant sur le bus parallèle 83 est codé et décodé.

Un tel système électronique 74 est tout système comportant un bus de données ou même simplement deux fils électriques. Un tel système est par exemple un ordinateur, un téléphone portable, une machine à laver, un téléviseur un train ou un véhicule automobile.

En variante, le système électronique comporte 2n fils électriques, n codeur et n décodeurs, n étant un entier naturel.

En variante, seuls les deux ou les quatre fils électriques de bits de poids les plus faibles parmi les fils électriques de bits du bus 83 sont connectés à un codeur et à un décodeur. En effet comme visible sur la figure 4, le taux d'activité des bits de poids faible est plus important que le taux d'activité des bits de poids fort. En conséquence, la consommation des n/2+1 bits de poids faible du bus (dénommés bits 7 à 3) représente plus de 80 % de la consommation électrique globale du bus.

En variante, la porte NAND 42 est remplacée par une porte AND, c'est-à-dire une porte « Et ».

Lorsque seuls les deux 87 (ou les quatre) fils électriques de bits de poids les plus faibles parmi les fils électriques 84, 85, 86, 87 de bits du bus de données sont connectés à un codeur 78 et à un décodeur 82, le fil électrique de bits de poids le plus fort parmi les deux (ou quatre) fils électriques connectés est considéré comme étant le conducteur électrique de bits de poids fort.

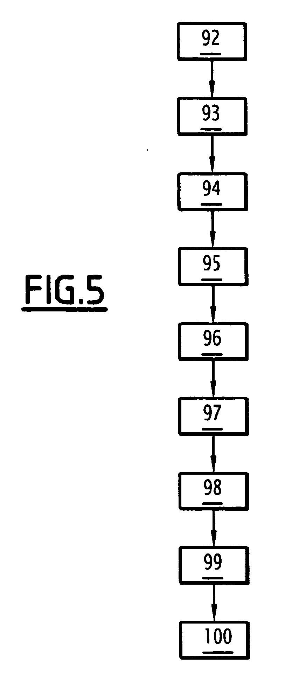

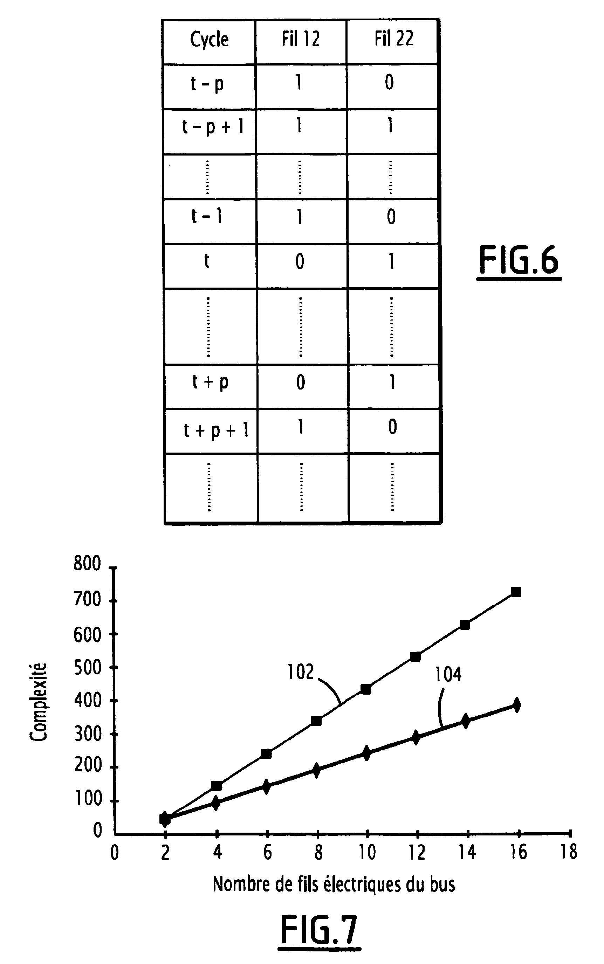

En référence aux figures 5 et 6, le procédé de codage de bits débute par une étape 92 de réception au cycle d'horloge t, d'un bit de poids fort de valeur égale à 0 à la première entrée 4, et d'un bit de poids faible de valeur égale à 1 à la deuxième entrée 14.

Au cours d'une étape 93, la première unité de sélection 24 compare la valeur du bit de poids fort du cycle d'horloge t-1 à la valeur du bit de poids fort du cycle d'horloge t. Comme visible sur la figure 6, le bit de poids fort du cycle d'horloge t-1 à une valeur égale à 1, et le bit de poids fort du cycle d'horloge t à une valeur égale à 0. Ces deux bits ont une valeur différente. En conséquence, la première porte XOR 30 génère un bit de valeur égale à 1 à sa sortie.

Au cours d'une étape 94, la première unité de sélection 26 compare la valeur du bit de poids faible du cycle d'horloge t-1 à la valeur du bit de poids faible du cycle d'horloge t. Comme visible sur la figure 6, ces deux bits ont des valeurs différentes et donc, la deuxième porte XOR 34 génère un bit de valeur égale à 1 à sa sortie.

Au cours d'une étape 95, la troisième unité de sélection 28 compare la valeur du bit de poids fort du cycle d'horloge t à la valeur du bit de poids faible du cycle d'horloge t. Ces deux bits ont des valeurs différentes et donc, la troisième porte XOR 40 génère un bit de valeur égale à 1 à sa sortie.

Au cours d'une étape 96, la quatrième porte NAND 42 compare les valeurs des bits générées par les première 30, deuxième 34 et troisième 40 portes XOR. La quatrième porte NAND 42 génère un bit de valeur égale à 0 car dans ce cas, toutes ces valeurs sont égales à 1. Ce bit est transmis aux électrodes de commande des multiplexeurs 44 et 46.

Sur réception de ce bit de valeur égale à 0, le multiplexeur 44 transmet le bit de poids faible provenant de la deuxième entrée 14 à la première sortie 6, au cours d'une étape 97.

Sur réception de ce bit de valeur égale à 0, le multiplexeur 46 transmet le bit de poids fort provenant de la première entrée 4 à la deuxième sortie 16, au cours de l'étape 97.

Au cours d'une étape 98, le troisième fil électrique 48 transmet le bit de valeur égale à 0 du cycle d'horloge t issu de la porte NAND 42 au décodeur 60. Ce bit constitue un signal d'avertissement d'une transmission spatialement inversée de bits.

Le comportement du codeur 2 est représenté par l'équation suivante :

$$(12(t-1) \text{ XOR } 12(t)) \text{ and } (12(t) \text{ XOR } 22(t)) \text{ and } (22(t-1)) \text{ XOR } 22(t)) = 1$$

Au cours d'une étape 99, le décodeur 60 réceptionne le signal d'avertissement, ainsi que le bit de poids fort du cycle d'horloge t sur le fil électrique de transmission de bit de poids faible, et le bit de poids faible du cycle d'horloge t sur le fil électrique de transmission de bit de poids fort.

Au cours d'une étape 100, le multiplexeur 70 commandé par le signal d'avertissement adresse le bit de poids fort issu de la deuxième entrée 64 à la première sortie 66. Parallèlement, le multiplexeur 72 commandé par le signal d'avertissement adresse le bit de poids faible issu de la première entrée 62 à la deuxième sortie 68.

Autrement dit, le multiplexeur 44 transmet le bit de poids fort transmis par le premier fil 12, c'est-à-dire le fil de transmission de bits de poids fort, sur le deuxième fil 22. De même, le multiplexeur 46 transmet le bit de poids faible transmis par le deuxième fil 22, c'est à dire le fil de transmission de bits de poids faible, sur le premier fil 12.

Ainsi, le procédé de codage adresse un bit de poids faible sur le fil électrique de transmission de bits de poids fort, et un bit de poids fort sur le fil électrique de transmission de bits de poids faible lorsque deux fils adjacents comportent des transitions de bits spatialement inversées.

Une autre transition croisée est illustrée sur la figure 6, au cycle d'horloge t+p et t+p+1. Le procédé de décodage effectue une transmission inverse pour rétablir l'ordre correct des bits.

Lorsque le procédé de codage n'est pas appliqué à deux transitions de bits spatialement inversées sur deux fils adjacents, comme par exemple au cycle d'horloge t-p+1, la première unité de sélection 24 compare la valeur du bit de poids fort du cycle d'horloge t-p+1 à la valeur du bit de poids fort du cycle d'horloge t-p. Comme visible sur la figure 6, ces deux bits ont la même valeur et donc, la première porte XOR 30 génère un bit de valeur égale à 0 à sa sortie.

La deuxième unité de sélection 26 compare alors la valeur du bit de poids faible du cycle d'horloge t-p+1 à la valeur du bit de poids faible du cycle d'horloge t-p. Comme visible sur la figure 6, ces deux bits ont des valeurs différentes et donc, la deuxième porte XOR 34 génère un bit de valeur égale à 1 à sa sortie.

La troisième porte XOR 40 compare la valeur du bit de poids fort du cycle d'horloge t-p+1 à la valeur du bit de poids faible du cycle d'horloge t-p+1. Comme ces valeurs sont identiques, l'unité de sélection 28 génère un bit de valeur égale à 0 à sa sortie.

Comme la porte NAND 42 reçoit en entrée deux bits de valeur nulle et un bit de valeur 1, elle génère à sa sortie un bit de valeur 1.

Le multiplexeur 44 transmet le bit de poids fort transmis par le fil 12, c'est-à-dire le fil de transmission de bits de poids fort, sur ce même fil 12. Autrement dit, le multiplexeur 44 connecte la première entrée 4 à la première sortie 6.

De même, le multiplexeur 46 transmet le bit de poids faible transmis par le fil 22, c'est-à-dire le fil de transmission de bits de poids faible, sur ce même fil 22. Autrement dit, le multiplexeur 46 connecte la deuxième entrée 14 à la deuxième sortie 16.

Le décodeur 60 ne réceptionne pas de signal d'avertissement de sorte que le multiplexeur 70 connecte la première entrée 62 à la première sortie 66 et que le deuxième multiplexeur 72 connecte la deuxième entrée 64 à la première sortie 68.

La figure 7 représente un graphe illustrant la complexité d'un codeur - décodeur en fonction du nombre de fils électriques du bus. La complexité d'un codeur-décodeur représente le nombre de transistors, rajoutés au système électronique par l'ajout du codeur et du décodeur.

Sur la figure 7, la ligne 104 représente la complexité pour un codeur-décodeur selon l'invention et la ligne 102 représente la complexité pour un codeur décodeur de type « bus invert ».

Comme visible sur ce graphe, plus le nombre de fils électriques du bus est important, plus le codeur-décodeur de type « bus invert » nécessite un nombre important de transistors. Ces transistors consomment eux aussi de l'énergie électrique. Ceci amoindrit le gain en consommation électrique globale de ce codeur-décodeur.

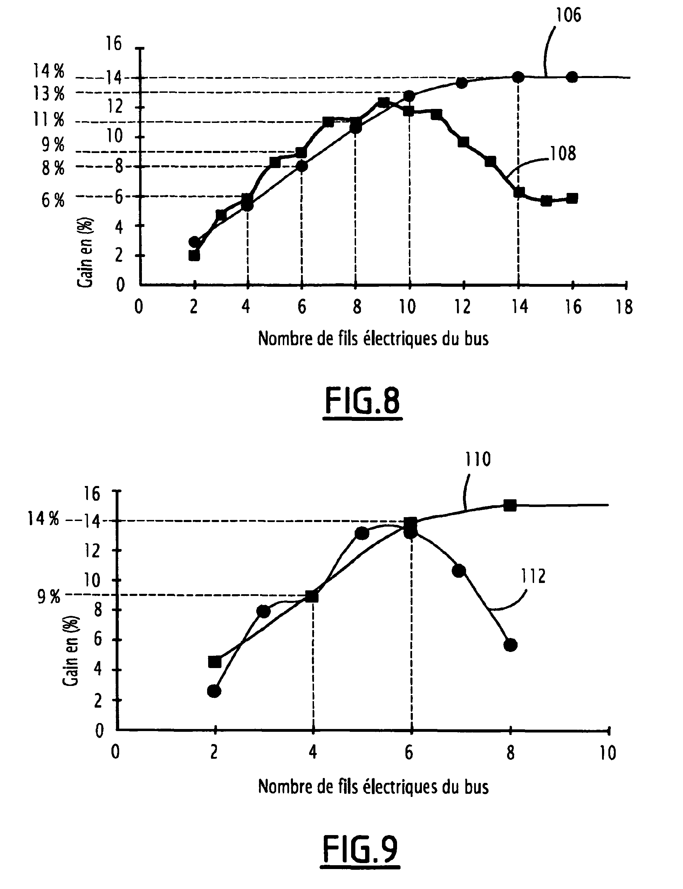

Les figures 8 et 9 représentent des gains en consommation électrique sur le bus en fonction du nombre de fils électriques connectés à un codeur-décodeur selon l'invention et à un codeur décodeur de type « bus invert ».

En particulier, la figure 8 représente le gain pour des données de type parole, alors que la figure 9 représente le gain pour des données de type image.

Sur la figure 8, le gain en consommation électrique sur le bus muni des codeurs-décodeurs selon l'invention, illustré par la courbe 106, est supérieur au gain en consommation électrique sur le bus muni des codeurs-décodeurs de type « bus invert » illustré par la courbe 108, lorsque le nombre de fils électriques par bus est supérieur à dix fils électriques.

Ces courbes 106, 108 ne tiennent pas compte de la consommation électrique des composants électroniques des codeurs-décodeurs. Lorsqu'il est tenu compte de cette consommation, le gain en consommation électrique sur le bus muni des codeurs-décodeurs selon l'invention est supérieur au gain sur le bus muni des codeurs-décodeurs de type « bus invert » pour un nombre de fils inférieur à dix fils car la complexité des codeurs décodeurs selon l'invention est inférieure à celle des codeurs-décodeurs de type « bus invert ».

Contrairement au gain en consommation électrique d'un bus muni de codeurs-décodeurs du type « bus invert », le gain en consommation électrique d'un bus muni de codeurs-décodeurs selon l'invention atteint et reste à une valeur maximale lorsque quatorze ou plus de quatorze fils électriques du bus sont connectés à des codeurs-décodeurs selon l'invention.

Sur la figure 9, le gain en consommation électrique sur le bus muni des codeurs-décodeurs selon l'invention, illustré par la courbe 110, est supérieur au gain en consommation électrique sur le bus muni des codeurs-décodeurs de type « bus invert » illustré par la courbe 112, lorsque le nombre de fils électriques par bus est supérieur à six fils électriques.

Les courbes 110 et 112 ne tiennent pas compte de la consommation électrique des composants des codeurs-décodeurs. De même, contrairement au gain en consomamtion électrique d'un bus muni de codeurs-décodeurs de type « bus invert », le gain en consommation électrique d'un bus muni de codeurs-décodeurs selon l'invention atteint et reste à une valeur maximale lorsque six ou plus de six fils électriques du bus sont connectés à des codeurs-décodeurs selon l'invention.

Avantageusement, le codeur et le décodeur selon l'invention permettent d'augmenter le gain en consommation électrique des systèmes électroniques, et en particulier des systèmes comprenant des bus ayant un grand nombre de fils électriques.

En variante, le codeur et/ou le décodeur est réalisé à partir d'un micro contrôleur comprenant une mémoire dans laquelle un logiciel est enregistré, le logiciel comprenant une partie ou bloc de logiciel de sélection et une partie ou bloc de logiciel de commutation.

Ce mode de réalisation n'est avantageux d'un point de vue de la consommation en électricité que lorsque ce micro contrôleur est partagé, c'est-à-dire lorsqu'il réalise également d'autres fonctions au sein du système électronique.

L'invention concerne donc également un support d'enregistrement d'informations qui comporte des instructions pour l'exécution du procédé de codage et/ou du procédé de décodage, lorsque ces instructions sont exécutées par un micro contrôleur.

**Revendications**

1. Codeur (2) comprenant une première (4) et une deuxième (14) entrées destinées à être connectées à un conducteur électrique de bits de poids faible (12) et respectivement à un conducteur électrique de bits de poids fort (22), une première (6) et une deuxième (16) sorties destinées à être connectées à un conducteur électrique de bits de poids faible (12) et respectivement à un conducteur électrique de bits de poids fort (22), le codeur (2) comportant un bloc de sélection (24, 26, 28) apte à sélectionner un bit de poids fort et un bit de poids faible et un bloc de commutation (44, 46) apte à relier d'une part la première entrée (4) à la première sortie (6), et d'autre part la deuxième entrée (14) à la deuxième sortie (16), **caractérisé en ce que** le bloc de sélection (24, 26, 28) est propre à sélectionner une transition du bit de poids fort et une transition du bit de poids faible, chacune entre un cycle d'horloge t-1 et un cycle d'horloge t, les deux transitions étant spatialement inversées sur les conducteurs électriques de bits de poids faible (12) et de bits de poids fort (22), et à générer un signal d'avertissement d'une transmission spatialement inversée de bits, dans lequel le bloc de sélection (24, 26, 28) comprend :

   - une première unité de sélection (24) apte à sélectionner au moins un bit de poids fort du cycle d'horloge t ayant une valeur différente de la valeur du bit du cycle d'horloge t-1 transmis par la première sortie (6) ;
   - une deuxième unité de sélection (26) apte à sélectionner au moins un bit de poids faible du cycle d'horloge t ayant, une valeur différente de la valeur du bit du cycle d'horloge t-1 transmis après la deuxième sortie (16) ; et
   - une troisième unité de sélection (28) apte à sélectionner parmi les bits sélectionnés par la première (24) et la deuxième (26) unités de sélection, un bit de poids fort et un bit de poids faible, le bit de poids fort du cycle d'horloge t ayant une valeur différente de la valeur du bit de poids faible du cycle d'horloge t, et

   **en ce que** le bloc de commutation (44, 46) est apte à être commuté pour relier la première entrée (4) à la deuxième sortie (6) et la deuxième entrée (14) à la première sortie (16), lorsque le bloc de sélection (24, 26, 28) a sélectionné un bit de poids faible et un bit de poids fort et a transmis au bloc de commutation (44, 46) le signal d'avertissement d'une transmission spatialement inversée de bits; et
   **en ce que** le codeur (2) comprend des moyens de transmission (48) du signal d'avertissement d'une transmission spatialement inversée de bits.

2. Codeur (2) selon la revendication 1, dans lequel la première unité de sélection (24) comprend une première porte logique (30) connectée à la première entrée (4) du codeur, et un premier registre (32) connecté à la première sortie (6) du codeur (12) et à la première porte logique (30), le premier registre (32) étant apte à mémoriser la valeur du bit du cycle d'horloge t-1 transmis par la première sortie (6), la première porte logique (30) étant apte à comparer la valeur du bit mémorisé dans le registre au bit de poids fort du cycle d'horloge t reçu par la première entrée (4).

3. Codeur (2) selon l'une quelconque des revendications 1 et 2, dans lequel la deuxième unité de sélection (26) comprend une deuxième porte logique (34) connectée à la deuxième entrée (14) du codeur, et un deuxième registre (36) connecté à la deuxième sortie (16) du codeur et à la deuxième porte logique (34), le deuxième registre (36) étant apte à mémoriser la valeur du bit du cycle d'horloge t-1 transmis par la deuxième sortie (16), la deuxième porte logique (34) étant apte à comparer la valeur du bit mémorisé dans le registre (36) à la valeur du bit de poids fort du cycle d'horloge t reçu par la deuxième entrée (14).

4. Codeur (2) selon l'une quelconque des revendications 1 à 3, dans lequel la troisième unité de sélection (28) comporte :

   - une troisième porte logique (40) connectée à la première (4) et à la deuxième (14) entrées du codeur, la troisième porte logique (40) étant apte à comparer, la valeur du bit de poids faible du cycle d'horloge t à la valeur du bit de poids fort du cycle d'horloge t ; et
   - une quatrième porte logique (42) connectée aux première (24) et deuxième (26) unités de sélection et à la troisième porte logique (40), ladite quatrième porte logique (42) étant propre à générer un bit de valeur prédéfinie lorsque les première (24) et deuxième (26) unités de sélection et la troisième porte logique (40) ont sélectionné un bit de poids fort et un bit de poids faible au cycle d'horloge t.

5. Codeur (2) selon l'une quelconque des revendications précédentes, dans lequel le bloc de sélection (24, 26, 28) est apte à générer un bit de valeur prédéfinie lorsqu'il sélectionne un bit de poids faible et un bit de poids fort, le bloc de commutation (44, 46) comportant un premier (44) et un deuxième (46) connecteurs, la commutation desdits connecteurs étant commandée par le bit généré par le bloc de sélection (24, 26, 28)

6. Codeur (2) selon l'une quelconque des revendications précédentes, dans lequel les moyens de transmission (47, 48) comportent un moyen de connexion (47) destiné à être connecté à un conducteur électrique supplémentaire (48), ledit moyen de connexion (47) étant relié à la sortie du bloc de sélection (24, 26, 28), le signal d'avertissement étant un bit de valeur prédéfinie généré par le bloc de sélection (24, 26, 28).

7. Décodeur (60) destiné à décoder les bits codés par le codeur (2) selon l'une quelconque des revendications 1 à 6, le décodeur (60) comprenant une première (62) et une deuxième (64) entrées destinées à être connectées à un conducteur électrique de bits de poids faible (12) et respectivement à un conducteur de bits poids fort (22), une première (66) et une deuxième (68) sorties destinées à être connectées à un conducteur électrique de bits de poids faible (12) et respectivement d'un conducteur de bits de poids fort (22), **caractérisé en ce qu'**il comprend un bloc de commutation (70, 72) apte à relier d'une part la première entrée (62) à la première sortie (66), et d'autre part la deuxième entrée (64) à la deuxième sortie (68), le bloc de commutation (70, 72) étant apte à être commuté pour relier la première entrée (62) à la deuxième sortie (68) et la deuxième entrée (64) à la première sortie(66), lorsque le bloc de commutation (70, 72) réceptionne un signal d'avertissement d'une transmission inversée de bits du codeur, ledit signal d'avertissement étant transmis par le codeur (2).

8. Décodeur (60) selon la revendication 7, dans lequel le bloc de commutation (70, 72) comporte un premier (70) et un deuxième (72) connecteurs ayant chacun une électrode de commande destinée à être commandée par le signal d'avertissement transmis par le codeur (2).

9. Système électronique (74) **caractérisé en ce qu'**il comprend au moins un codeur (75, 76, 77, 78) selon l'une quelconque des revendications 1 à 6, un décodeur (79, 80, 81, 82) selon l'une quelconque des revendications 7 et 8, et un bus de données (83) comprenant au moins 2n conducteurs électriques (84, 85, 86, 87), n étant un entier naturel, au moins deux conducteurs électriques (87) de bits de poids les plus faibles du bus de données (83) étant connectés à un ou chaque codeur (75, 76, 77, 78) et au décodeur (79, 80, 81, 82).

10. Procédé de codage de bits transmis par au moins un premier (12) et un deuxième (22) conducteurs électriques aptes à transmettre des bits de poids fort et respectivement des bits de poids faible, le procédé comprenant une étape de sélection (93, 94, 95, 96) au cycle d'horloge t d'un bit de poids faible et d'un bit de poids fort et une étape de transmission (97) du bit de poids fort et du bit de poids faible sélectionnés sur le deuxième (22) et respectivement le premier (12) conducteurs électriques, **caractérisé en ce que** l'étape de sélection (93, 94, 95, 96) sélectionne une transition du bit de poids fort et une transition du bit de poids faible, chacune entre un cycle d'horloge t-1 et un cycle d'horloge t, les deux transitions étant spatialement inversées sur les premier (12) et deuxième (22) conducteurs électriques et génère un signal d'avertissement d'une transmission spatialement inversée de bits, dans lequel l'étape de sélection comprend les étapes suivantes :

a) sélectionner (93) au moins un bit de poids faible du cycle d'horloge t ayant une valeur différente de la valeur d'un bit de poids faible du cycle d'horloge t-1 ;
b) sélectionner (94) au moins un bit de poids fort du cycle d'horloge t ayant une valeur différente de la valeur d'un bit de poids fort du cycle d'horloge t-1 ;
c) parmi les bits sélectionnés aux étapes a) et b), sélectionner (95, 96) un bit de poids faible et un bit de poids fort, le bit de poids fort du cycle d'horloge t ayant une valeur différente du bit de poids faible du cycle d'horloge t, et

**en ce qu'**il comprend en outre l'étape suivante :

- transmettre (98) le signal d'avertissement d'une transmission spatialement inversée de bits.

11. Procédé de décodage de bits codés selon le procédé de codage de la revendication 10, dans lequel des bits de poids fort et des bits de poids faible sont destinés à être transmis par au moins un premier (12) et respectivement un deuxième (22) conducteurs électriques, **caractérisé en ce que** le procédé comprend, sur réception (99) d'un signal d'avertissement d'une transmission inversée de bits, une étape de transmission (100) du bit de poids faible sur le deuxième conducteur électrique (22) et du bit de poids fort sur le premier conducteur électrique (12).

12. Support d'enregistrement d'informations, **caractérisé en ce qu'**il comporte des instructions pour l'exécution d'un procédé de codage conforme à la revendication 10, lorsque ces instructions sont exécutées par un calculateur électronique.

13. Support d'enregistrement d'informations, **caractérisé en ce qu'**il comporte des instructions pour l'exécution d'un procédé de décodage conforme à la revendication 11, lorsque ces instructions sont exécutées par un calculateur électronique.

**Patentansprüche**

1. Kodierer (2) aufweisend einen ersten Eingang (4) und einen zweiten Eingang (14), die dazu vorgesehen sind, mit einer elektrischen Leitung für niederwertige Bits (12) bzw. einer elektrischen Leitung für höherwertige Bits (22) verbunden zu werden, einen ersten Ausgang (6) und einen zweiten Ausgang (16), die dazu vorgesehen sind, mit einer elektrischen Leitung für niederwertige Bits (12) bzw, einer elektrischen Leitung für höherwertige Bits (22) verbunden zu werden, wobei der Kodierer (2) einen Auswahlblock (24, 26, 28) aufweist, der eingerichtet ist, ein höherwertiges Bit und ein niederwertiges Bit auszuwählen, und einen Umschaltblock (44, 46), der eingerichtet ist, einerseits den ersten Eingang (4) mit dem ersten Ausgang (6) zu verbinden und andererseits den zweiten Eingang (14) mit dem zweiten Ausgang (16) zu verbinden, dadurch charakterisiert, dass der Auswahlblock (24, 26, 28) geeignet ist, einen Übergang der höherwertigen Bits und einen Übergang der niedrigwertigen Bits auszuwählen, jeder zwischen einem Taktzyklus t-1 und einem Taktzyklus t, wobei die zwei Übergänge räumlich invers auf der elektrischen Leitung für niederwertige Bits (12) und der elektrischen Leitung für höherwertige Bits (22) sind, und ein Warnsignal einer räumlich inversen Übertragung von Bits zu erzeugen, in dem der Auswahlblock (24, 26, 28) aufweist:

   - eine erste Auswahleinheit (24), eingerichtet zum Auswählen mindestens eines höherwertigen Bits des Taktzyklus t mit einem Wert, der unterschiedlich ist von dem Wert des Bits des Taktzyklus t-1, übertragen von dem ersten Ausgang (6);
   - eine zweite Auswahleinheit (26), eingerichtet zum Auswählen mindestens eines niederwertigen Bits des Taktzyklus t mit einem Wert, der unterschiedlich ist von dem Wert des Taktzyklus t-1, übertragen von dem zweiten Ausgang (16), und
   - eine dritte Auswahleinheit (28), eingerichtet zum Auswählen aus den durch die erste Auswahleinheit (24) und die zweite Auswahleinheit (26) ausgewählten Bits eines höherwertigen Bits und eines niederwertigen Bits, wobei das höherwertige Bit des Taktzyklus t einen Wert hat, der unterschiedlich ist von dem Wert des niederwertigen Bits des Taktzyklus t und

   dadurch, dass der Umschaltblock (44, 46) geeignet ist, umgeschaltet zu werden, so dass der ersten Eingang (4) mit dem zweiten Ausgang (6) und der zweite Eingang (14) mit dem ersten Ausgang (16) verbunden ist, wenn der Auswahlblock (24, 26, 28) ein niederwertiges Bit und ein höherwertiges Bit ausgewählt hat und das Warnsignal einer räumlich inversen Übertragung von Bits an den Kommunikationsblock (44, 46) gesendet hat; und

   dadurch, dass der Kodierer (2) Mittel zum Übertragen (48) des Warnsignals einer räumlich inversen Übertragung von Bits aufweist.

2. Kodierer (2) gemäß Anspruch 1, in dem die erste Auswahleinheit (24) ein erstes Logik-Gatter (30), das mit dem ersten Eingang (4) des Kodierers verbunden ist, und ein erstes Register (32), das mit dem ersten Ausgang (6) des Kodierers (12) und dem ersten Logik-Gatter (30) verbunden ist, aufweist, wobei das erste Register (32) eingerichtet ist, den Wert des über den ersten Ausgang (6) übertragene Bits des Taktzyklus t-1 zu speichern, wobei das erste Logik-Gatter (30) eingerichtet ist, den Wert des in dem Register gespeicherten Bits mit dem über den ersten Eingang (4) empfangene höherwertigen Bit des Taktzyklus t zu vergleichen.

3. Kodierer (2) gemäß einem der Ansprüche 1 und 2, in dem die zweite Auswahleinheit (26) ein zweites Logik-Gatter (34) aufweist, das mit dem zweiten Eingang (14) des Kodierers verbunden ist und ein zweites Register (36), das mit dem zweiten Ausgang (16) des Kodierers und dem zweiten Logik-Gatter (34) verbunden ist, wobei das zweite Register (36) eingerichtet ist, den Wert des über den zweiten Ausgang (16) übertragenen Bits des Taktzyklus t-1 zu speichern, wobei das zweite Logik-Gatter (34) eingerichtet ist, den Wert des in dem Register gespeicherten Bits mit dem über den zweiten Eingang (14) empfangenen höherwertigen Bit des Taktzyklus t zu vergleichen.

4. Kodierer (2) gemäß einem der Ansprüche 1 bis 3, in dem die dritte Auswahleinheit (28) aufweist:

- ein drittes Logik-Gatter (40), das mit dem ersten Eingang (4) und dem zweiten Eingang (14) des Kodierers verbunden ist, wobei das dritte Logik-Gatter (40) eingerichtet ist, den Wert des niederwertigen Bits des Taktzyklus t mit dem Wert des höherwertigen Bits des Taktzyklus t zu vergleichen; und

- ein viertes Logik-Gatter (42), das mit der ersten Auswahleinheit (24), der zweiten Auswahleinheit (26) und dem dritten Logik-Gatter (40) verbunden ist, wobei das vierte Logik-Gatter (42) geeignet ist, ein Bit mit einem vordefinierten Wert zu erzeugen, wenn die erste Auswahleinheit (24), die zweite Auswahleinheit (26) und das dritte Logik-Gatter (40) ein niederwertiges Bit und ein höherwertiges Bit im Taktzyklus t ausgewählt haben.

5. Kodierer (2) gemäß einem der vorhergehenden Ansprüche, in dem der Auswahlblock (24, 26, 28) eingerichtet ist, ein Bit mit einem vordefinierten Wert zu erzeugen, wenn er ein niederwertiges Bit und ein höherwertiges Bit auswählt, wobei der Umschaltblock (44, 46) einen ersten Verbinder (44) und einen zweiten Verbinder (46) aufweist, wobei das Umschalten der Verbinder von dem von dem Auswahlblock (24, 26, 28) erzeugtem Bit gesteuert wird.

6. Kodierer (2) gemäß einem der vorhergehenden Ansprüche, in dem die Mittel zum Übertragen (47, 48) ein Verbindungsmittel (47) aufweisen, dass dazu vorgesehen ist, mit einer zusätzlichen elektrischen Leitung (48) verbunden zu werden, wobei das Verbindungsmittel (47) mit einem Ausgang des Auswahlblocks (24, 26, 28) verbunden ist, wobei das Warnsignal ein von dem Auswahlblock (24, 26, 28) erzeugtes Bit mit einem vordefinierten Wert ist.

7. Dekodierer (60), vorgesehen zum Dekodieren der von dem Kodierer (2) gemäß einem der Ansprüche 1 bis 6 kodierten Bits, wobei der Dekodierer (60) einen ersten Eingang (62) und einen zweiten Eingang (64), die dazu vorgesehen sind, mit einer elektrischen Leitung für niederwertige Bits (12) bzw. einer Leitung für höherwertige Bits (22) verbunden zu werden, und einen ersten Ausgang (66) und einen zweiten Ausgang (68), die dazu vorgesehen sind, mit einer elektrischen Leitung für niederwertige Bits (12) bzw. einer Leitung für höherwertige Bits (22) verbunden zu werden, aufweist,
dadurch charakterisiert, dass er einen Umschaltblock (70, 72) aufweist, der eingerichtet ist, einerseits den ersten Eingang (62) mit dem ersten Ausgang (66) zu verbinden und andererseits den zweiten Eingang (64) mit dem zweiten Ausgang (68) zu verbinden, wobei der Umschaltblock (70, 72) eingerichtet ist, umgeschaltet zu werden, so dass der erste Eingang (62) mit dem zweiten Ausgang (68) verbunden ist und der zweite Eingang (64) mit dem ersten Ausgang (66) verbunden ist, wenn der Umschaltblock (70, 72) ein Warnsignal einer räumlich inversen Übertragung von Bits empfängt, wobei das Warnsignal von dem Kodierer (2) übertragen wird.

8. Dekodierer (60) gemäß Anspruch 7, in dem der Umschaltblock (70, 72) einen ersten Verbinder (70) und einen zweiten Verbinder (72) aufweist, wobei jeder eine Steuerelektrode aufweist, die dazu vorgesehen ist, durch das von dem Kodierer (2) übertragene Warnsignal gesteuert zu werden.

9. Elektronisches System (74), dadurch charakterisiert, dass es mindestens einen Kodierer (75, 76, 77, 78) gemäß einem der Ansprüche 1 bis 6, einen Dekodierer (79, 80, 81, 82) gemäß einem der Ansprüche 7 und 8 und einen Datenbaus (83) mit mindestens 2n elektrischen Leitungen (84, 85, 86, 87), wobei n einen natürliche Zahl ist, aufweist, wobei mindestens zwei elektrische Leitungen (87) für niedrigstwertige Bits des Datenbusses (83) mit einem oder jedem Kodierer (75, 76, 77, 78) und mit dem Dekodierer (79, 80, 81, 82) verbunden sind.

10. Verfahren zum Kodieren von Bits, übertragen von mindestens einer ersten elektrischen Leitung (12) und einer zweiten elektrischen Leitung (22), die eingerichtet sind zum Übertragen von höherwertigen Bits bzw. niederwertigen Bits,
wobei das Verfahren einen Auswahlschritt (93, 94, 95, 96) im Taktzyklus t eines niederwertigen Bits und eines höherwertigen Bits und einen Schritt der Übertragung (97) des ausgewählten höherwertigen Bits und des ausgewählten niederwertigen Bits auf der zweiten elektrischen Leitung (22) bzw. der ersten elektrischen Leitung (12) aufweist,
dadurch charakterisiert, dass der Auswahlschritt (93, 94, 95, 96) einen Übergang des höherwertigen Bits und einen Übergang des niederwertigen Bits auswählt, jeder zwischen einem Taktzyklus t-1 und einem Taktzyklus t, wobei die Übergänge räumlich invers auf der elektrischen Leitung für niederwertige Bits (12) und der elektrischen Leitung für höherwertige Bits (22) sind, und ein Warnsignals einer räumlich inversen Übertragung von Bits erzeugt, in dem der Auswahlschritt die folgenden Schritte aufweist:

a) Auswählen (93) mindestens eines niederwertigen Bits des Taktzyklus t mit einem Wert, der unterschiedlich ist von dem Wert des Bits des Taktzyklus t-1;
b) Auswählen (94) mindestens eines höherwertigen Bits des Taktzyklus t mit einem Wert, der unterschiedlich ist von dem Wert des Taktzyklus t-1;

c) aus den in den Schritten a) und b) ausgewählten Bits Auswählen (95, 96) eines niederwertigen Bits und eines höherwertigen Bits, wobei das höherwertige Bit des Taktzyklus t einen Wert hat, der unterschiedlich ist von dem Wert des niederwertigen Bits des Taktzyklus t und

dadurch, dass es den folgenden Schritt aufweist:

- Übertragen (98) des Warnsignals einer räumlich inversen Übertragung von Bits.

11. Verfahren zum Dekodieren von Bits kodiert gemäß dem Verfahren zum Kodieren gemäß Anspruch 10, in dem höherwertige Bits und niederwertige Bits dazu vorgesehen sind, von mindestens einer ersten elektrischen Leitung (12) bzw. einer zweiten elektrischen Leitung (22) übertragen zu werden, dadurch charakterisiert, dass das Verfahren aufweist, bei Emfpang (99) eines Warnsignals einer räumlich inversen Übertragung von Bits, einen Schritt der Übertragung (100) des niederwertigen Bits auf der zweiten elektrischen Leitung (22) und des höherwertigen Bits auf der ersten elektrischen Leitung (12).

12. Informationsspeicherträger, dadurch charakterisiert, dass er Instruktionen für die Ausführung eines Verfahrens zum Kodieren gemäß Anspruch 10, wenn die Instruktionen von einem elektrischen Rechner ausgeführt werden, aufweist.

13. Informationsspeicherträger, dadurch charakterisiert, dass er Instruktionen für die Ausführung eines Verfahrens zum Dekodieren gemäß Anspruch 11, wenn die Instruktionen von einem elektrischen Rechner ausgeführt werden, aufweist.

**Claims**

1. An encoder (2) comprising a first (4) and a second (14) input which are to be connected to an electrical conductor of less significant bits (12) and to an electrical conductor of more significant bits (22), respectively, and a first (6) and a second (16) output which are to be connected to an electrical conductor of less significant bits (12) and to an electrical conductor of more significant bits (22), respectively, the encoder (2) comprising a selection block (24, 26, 28) suitable for selecting a more significant bit and a less significant bit, and a switching block (44, 46) suitable for connecting, on the one hand, the first input (4) to the first output (6), and, on the other hand, the second input (14) to the second output (16),
**characterized in that** the selection block (24, 26, 28) is suitable for selecting a transition of the more significant bit and a transition of the less significant bit, each between a clock cycle t-1 and a clock cycle t, the two transitions being spatially inverted on the electrical conductors of less significant bits (12) and of more significant bits (22), and for generating a warning signal of a spatially inverted bit transmission,
wherein the selection block (24, 26, 28) comprises:

- a first selection unit (24) suitable for selecting at least one more significant bit at clock cycle t having a value different from the value of the bit at clock cycle t-1 transmitted by the first output (6);
- a second selection unit (26) suitable for selecting at least one less significant bit at clock cycle t having a value different from the value of the bit at clock cycle t-1 transmitted after the second output (16); and
- a third selection unit (28) suitable for selecting from the bits selected by the first (24) and the second (26) selection units, a more significant bit and a less significant bit, the more significant bit at clock cycle t having a value different from the value of the less significant bit at clock cycle t, and

**in that** the switching block (44, 46) is suitable for being switched in order to connect the first input (4) to the second output (16) and the second input (14) to the first output (6), when the selection block (24, 26, 28) has selected a less significant bit and a more significant bit and has transmitted to the switching block (44, 46) the warning signal of a spatially inverted bit transmission, and
**in that** the encoder (2) comprises means (48) for transmitting a warning signal of a spatially inverted bit transmission.

2. Encoder (12) according to claim 1, wherein the first selection unit (24) comprises a first logic gate (30) connected to the first input (4) of the encoder, and a first register (32) connected to the first output (6) of the encoder (12) and to the first logic gate (30), the first register (32) being suitable for storing the value of the bit at clock cycle t-1 transmitted by the first output (6), the first logic gate (30) being suitable for comparing the value of the bit stored in the register with the more significant bit at clock cycle t received by the first input (4).

**3.** An encoder (2) according to either claim 1 or claim 2, wherein the second selection unit (26) comprises a second logic gate (34) connected to the second input (14) of the encoder, and a second register (36) connected to the second output (16) of the encoder and to the second logic gate (34), the second register (36) being suitable for storing the value of the bit at clock cycle t-1 transmitted by the second output (16), the second logic gate (34) being suitable for comparing the value of the bit stored in the register (36) with the value of the more significant bit at clock cycle t received by the second input (14).

**4.** An encoder (2) according to any one of claims 1 to 3, wherein the third selection unit (28) comprises:

- a third logic gate (40) connected to the first (4) and to the second (14) input of the encoder, the third logic gate (40) being suitable for comparing the value of the less significant bit at clock cycle t with the value of the more significant bit at clock cycle t; and
- a fourth logic gate (42) connected to the first (24), second (26) and third (28) selection units, the fourth logic gate (42) being capable of generating a bit of predefined value when the first (24), second (26) and third (28) selection units have selected a more significant bit and a less significant bit at clock cycle t.

**5.** An encoder (2) according to any one of the preceding claims, wherein the selection block (24, 26, 28) is suitable for generating a bit of predefined value when it selects a less significant bit and a more significant bit, the switching block (44, 46) comprising a first (44) and a second (46) connector, the switching of the connectors being controlled by the bit generated by the selection block (24, 26, 28).

**6.** An encoder (2) according to any one of the preceding claims, wherein the transmission means (47, 48) comprise a connection means (47) which is to be connected to an additional electrical conductor (48), the connection means (47) being connected to the output of the selection block (24, 26, 28), the warning signal being a bit of predefined value generated by the selection block (24, 26, 28).

**7.** A decoder (60) for decoding the bits encoded by the encoder (2) according to any one of claims 1 to 6, the decoder (60) comprising a first (62) and a second (64) input which are to be connected to an electrical conductor of less significant bits (12) and to a conductor of more significant bits (22), respectively, and a first (66) and a second (68) output which are to be connected to an electrical conductor of less significant bits (12) and to a conductor of more significant bits (22), respectively,
**characterized in that** it comprises a switching block (70, 72) suitable for connecting, on the one hand, the first input (62) to the first output (66), and, on the other hand, the second input (64) to the second output (68), the switching block (70, 72) being suitable for being switched in order to connect the first input (62) to the second output (68) and the second input (64) to the first output (66), when the switching block (70, 72) receives a warning signal of an inverted bit transmission from the encoder, the warning signal being transmitted by the encoder (2).

**8.** A decoder (60) according to claim 7, wherein the switching block (70, 72) comprises a first (70) and a second (72) connector each having a control electrode which is to be controlled by the warning signal transmitted by the encoder (2).

**9.** An electronic system (74), **characterized in that** it comprises at least one encoder (75, 76, 77, 78) according to any one of claims 1 to 6, a decoder (79, 80, 81, 82) according to either claim 7 or claim 8, and a data bus (83) comprising at least 2n electrical conductors (84, 85, 86, 87), n being a natural integer, at least two electrical conductors (87) of least significant bits of the data bus (83) being connected to one or each encoder (75, 76, 77, 78) and to the decoder (79, 80, 81, 82).

**10.** A process for encoding bits transmitted by at least a first (12) and a second (22) electrical conductor which are suitable for transmitting more significant bits and less significant bits, respectively,
the process comprising a step of selecting (93, 94, 95, 96) at clock cycle t a less significant bit and a more significant bit, a step of transmitting (97) the selected more significant bit and the selected less significant bit on the second (22) and the first (12) electrical conductor, respectively;
**characterized in that** the selection step (93, 94, 95, 96) selects a transition of the more significant bit and a transition of the less significant bit, each between a clock cycle t-1 and a clock cycle t, the two transitions being spatially inverted on the first (12) and second (22) electrical conductors and generates a warning signal of a spatially inverted bit transmission, wherein the selection step comprises the following steps:

a) selecting (93) at least one less significant bit at clock cycle t having a value different from the value of a less significant bit at clock cycle t-1;

b) selecting (94) at least one more significant bit at clock cycle t having a value different from the value of a more significant bit at clock cycle t-1;

c) from the bits selected in steps a) and b), selecting (95, 96) a less significant bit and a more significant bit, the more significant bit at clock cycle t having a value different from that of the less significant bit at clock cycle t,

**in that** it also comprises the following step:

- transmitting (98) a warning signal of a spatially inverted bit transmission.

11. A process for decoding bits encoded according to the encoding process of claim 10, wherein more significant bits and less significant bits are to be transmitted by at least a first (12) and a second (22) electrical conductor, respectively, **characterized in that** the process comprises, on receiving (99) a warning signal of an inverted bit transmission, a step (100) of transmitting the less significant bit on the second electrical conductor (22) and the more significant bit on the first electrical conductor (12).

12. A data storage medium, **characterized in that** it comprises instructions for executing an encoding process according to claim 10, when these instructions are executed by an electronic calculator.

13. A data storage medium, **characterized in that** it comprises instructions for executing a decoding process according to claim 11, when these instructions are executed by an electronic calculator.

**FIG.1**

**FIG.2**

**FIG.3**

Numéro du bit

**FIG.4**

**FIG.5**

| Cycle | Fil 12 | Fil 22 |
|---|---|---|
| t − p | 1 | 0 |
| t − p + 1 | 1 | 1 |
| ⋮ | ⋮ | ⋮ |
| t − 1 | 1 | 0 |
| t | 0 | 1 |
| ⋮ | ⋮ | ⋮ |
| t + p | 0 | 1 |
| t + p + 1 | 1 | 0 |
| ⋮ | ⋮ | ⋮ |

## FIG.6

## FIG.7

## FIG.8

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1380961 A

**Littérature non-brevet citée dans la description**

- **Y. SHIN ; S.IK CHAE ; K. CHOI.** In processing of the 1998 international symposium on low power electronics and design (ISLPED. ACM Press, 1998, 127-129